Europäisches Patentamt

(19) European Patent Office

Office européen des brevets

(11) Publication number: **0 079 147**
A1

(12) # EUROPEAN PATENT APPLICATION

(21) Application number: 82305577.7

(51) Int. Cl.³: **F 16 K 47/04**

(22) Date of filing: 20.10.82

(30) Priority: 04.11.81 GB 8133283

(43) Date of publication of application:
18.05.83 Bulletin 83/20

(84) Designated Contracting States:
CH DE FR GB LI NL

(71) Applicant: British Nuclear Fuels Limited

Risley Warrington Cheshire, WA3 6AS(GB)

(72) Inventor: Thomas, Idwal Miles
12, Lodge Lane
Hartford Northwich Cheshire(GB)

(74) Representative: Dunnill, Laurence Arthur
Patents Branch United Kingdom Atomic Energy
Authority 11 Charles II Street
London SW1Y 4QP(GB)

(54) **Valves for gas.**

(57) A gas flow metering valve comprising a metering member (4) which moves within an aperture (41, 42, 43) in the valve housing (10). The aperture is shaped so as to have a cross section which decreases into the narrowest part of the aperture and then increases on the downstream side of the narrowest portion. The closure member (4) is conveniently of conical section but may have outer walls shaped in accordance with exponential or some other desired curve.

./...

Croydon Printing Company Ltd.

Fig. 1

VALVES FOR GAS

This invention relates to valves for gas.

Valves find application in plants wherein gas flow is to be controlled. Gas flow may be controlled by varying a position of a plug in an aperture in order to vary the area which is presented to flow in a controlled manner. The area presented to flow has a relationship with the stroke of the valve and so provides a desired valve characteristic. Unfortunately, such valves provide a pressure loss to the system, which in certain applications such as low pressure application can significantly increase the energy requirements for the plant.

An object of the present invention is to provide a valve in which pressure loss to the system is reduced.

According to the present invention, a valve comprises a housing which contains an inlet port and an outlet port, which housing defines an internal aperture, and a metering member operable to move within the aperture, the housing being shaped so as to provide a tapered or curved outer wall of narrowing cross section to fluid flow into the aperture and of widening cross section to fluid flow out of the aperture, fluid flowing at sonic velocity in a neck defined by the inner wall of the aperture and the outer wall of the metering member, there being a critical pressure ratio between inlet and outlet pressure in the region of 0.5 to 0.7.

The metering member may be shaped in accordance with a desired curve.

The metering member may be an elongate member which may be tapered to a point or may decrease in diameter exponentially towards a point.

Three embodiments of the present invention will now be described by way of example only with reference to the accompanying drawings, in which:

Figure 1 is a vertical section through a first embodiment of valve,

Figure 2 is a vertical section through a second embodiment of valve, and

Figure 3 is a vertical section through a third embodiment of valve.

Valves described below find particular, but not exclusive application in plant which contains a gas at low pressure (close to vacuum around 2 to 3 torr). Such valves may advantageously operate in a mode in which downstream pressure is decoupled from upstream pressure, and may be used with heavy gas such as uranium hexafluoride.

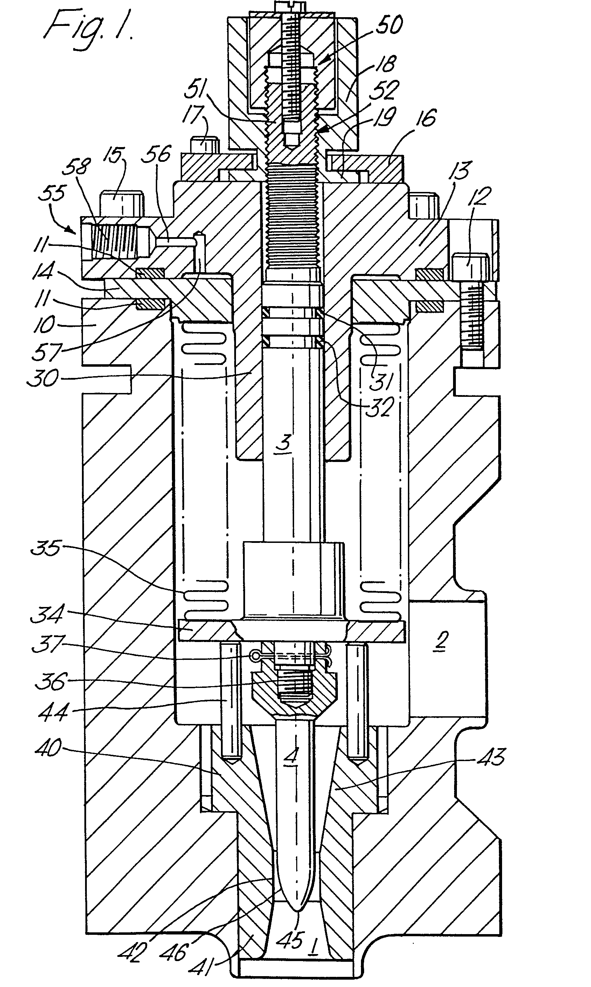

Reference is directed firstly to Figure 1, in which it can be seen that the valve includes ports 1 and 2. Gas flows from port 1 to port 2 in operation of the valve. The valve comprises a spindle 3 which has provided at one end thereof a control or metering member 4. The spindle 3 moves up and down to control gas flowing from port 1 to port 2.

In more detail, the housing comprises a body 10 which is bolted with bolts 12 to a bellows assembly carrying member 14. An upper body member 13 is bolted to the bellow carrying member 14 by bolts 15. Seals between the body 10 and bellows carrying member 14 and between the member 14 and the member 13 are indicated by 11. The member 13 has a cover 16 bolted thereto with bolts, one of which is indicated by 17. An adjuster housing 18 is secured to the cover 16 by flanges 19.

The spindle 3 is slidably attached within a portion 30 of member 13 and is sealed by two "O" ring seals 31 and 32. A bottom plate 34 screwed to the spindle 3 and the plate 34 forms an attachment plate for a bellows seal 35, the upper attachment point of which is the previously mentioned bellows carrying plate 14. A lug 36 is carried by the plate 34 and this plate carries the metering member 4, which is screwed thereto and retained by a cotter pin 37.

4

An insert 40 is provided at the bottom of the body 10. The insert 40 provides an inner surface which is circular at all horizontal cross sections. However, in vertical section, as is shown in the Figure, the insert 40 comprises a portion 41 defining a gas flow passage in the form of an inverted frustum, a portion 42 defining a cylindrical flow passage and a portion 43 defining a frustum. In use, gas flows into the portion 42, thence into the portion 43, and finally into portion 41. Stops 44 are provided to prevent overtravel of plate 34.

The control member 4 comprises an elongate rod which tapers to a point 45. Point 45 is origin for a generally exponential curve 46 of the control member outer wall which merges into a cylindrical rod along the rest of the members.

A valve adjuster mechanism is provided towards the upper end of the valve. The adjuster mechanism is referenced by 50 and comprises a generally threaded part 51 of the spindle 3, which threaded part is engaged by an adjusting nut 52, which is part of the housing 18 referred to above. Rotation of the adjusting nut causes a precalculated change in the area of cross section of flow of the gas through the insert 40 by reason of moving the closure member further into or out of the insert 40. A sniffer arrangement 55 comprising orthogonal bores 56 and 57 sealed by a removable plug 58, is provided for checking seals 11, 31 and 32.

In operation of the valve, sonic velocity of gas flowing through the aperture is required at the minimum area of cross section. Sonic flow enables upstream pressure to be decoupled from the downstream pressure, which downstream pressure is variable in operation owing to the variation of flow rate reacting with the conductance of the extraction system eg pumps. Since there is a pressure drop from the up to the downstream side of the valve, it is desirable to achieve as high a value for downstream pressure as is possible in order to reduce .the component of pressure loss in the extraction line. Owing to the low pressure and size of aperture the valve operates such that the gas flows at a low Reynold's number, at which low Reynolds number the critical pressure ratio for an orthodox valve shape is typically 0.33 (an orthodox valve having an aperture of constant cross section throughout). Provision of the shaped inlet and outlets enables a critical pressure ratio between outlet and inlet pressure to the inner region of 0.55 to 0.6 to be obtained.

Since the pressure loss across the valve is reduced, less work is required from the extraction pump system, thereby reducing the size of such pumping equipment and reducing both capital and power costs, whilst still maintaining a downstream pressure decoupled from the upstream pressure.

The valve is manually operated with the adjusting nut which has a calibrated dial showing stroke position. A pressure measurement of upstream pressure is associated with the valve and may be incorporated into it. A measurement of upstream pressure in association with the reading on the dial may then be used to determine the flow rate under sonic conditions according to a predetermined relationship between dial reading and corresponding area presented to the flowing gas.

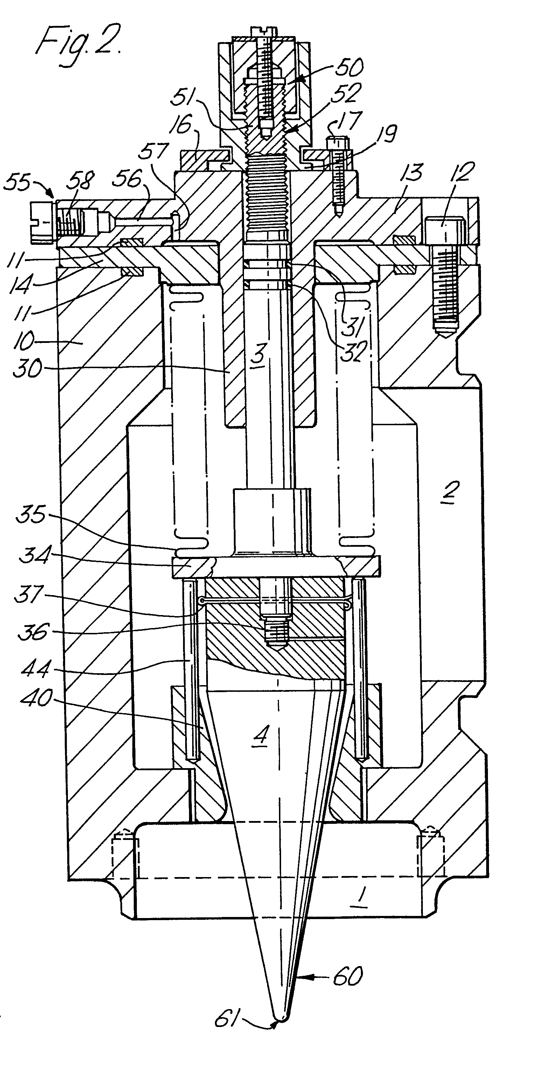

Reference is now directed to Figure 2, wherein like reference numerals to Figure 1 are used for like parts. Figure 2 shows a valve which is constructed so as to have a shorter length requirement for its housing. In the valve of Figure 2, the inlet aperture are of reduced size. Nonetheless, effective pressure decoupling occurs. The metering member is of conical shape 60 and has a curved apex 61.

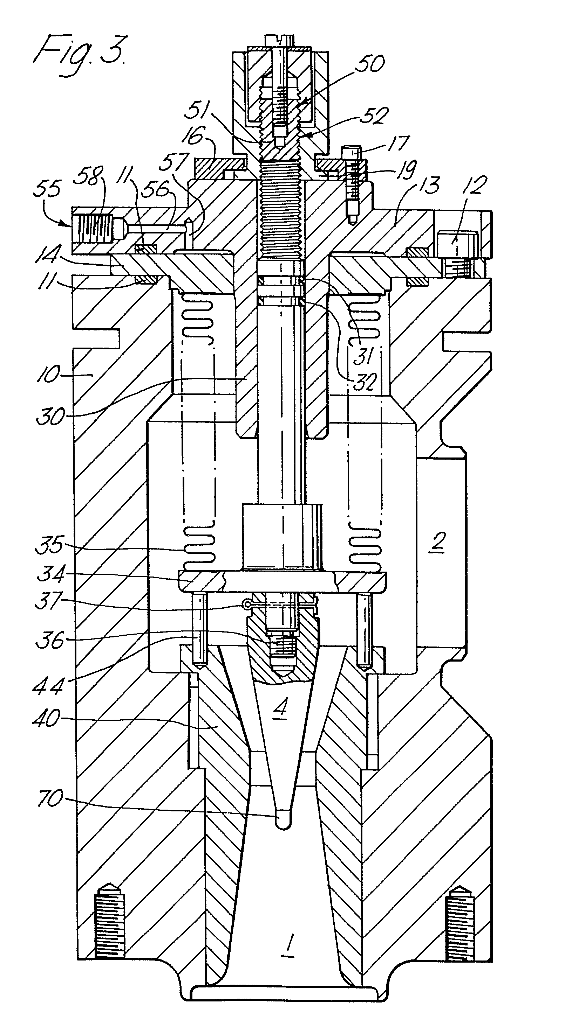

Reference is now directed to Figure 3 which shows a third embodiment of valve. In Figure 3, like reference numerals are used to Figures 1 and 2 for like parts. Figure 3 shows a metering member of different shape to that of Figures 1 and 2. In particular, the metering member differs from Figure 2 in so far as there is a constant cross section cylindrical portion 70 at the apex of the cone of the metering member.

The metering member 4 in the above valves could be shaped in accordance with any desired curve providing that sonic velocity was achieved in the aperture neck.

The valve is designed to control the flow rate of gas by varying the position of the moveable member in the fixed member in order to change the conductance or minimum area presented to flow. This may be done automatically via an actuator attached to the valve or manually as indicated in the diagram and the conductance may be related to a calibrated dial whose reading is a function of valve position and therefore area. A condition for the application of this valve is that flow rate or/and plant pressure upstream of the valve remains constant for varying downstream pressure which may occur when downstream pumps are subjected to varying loads for instance from parallel plants or in a condensing plant when trap pressure increase owing to increasing quantities of condensate or by the accumulation of incondensible gases. It is therefore desirable that the pressure ratio $\dfrac{P \text{ downstream}}{P \text{ upstream}}$ should be as high as possible to cope with changing downstream pressure and to enable pump or trap sizes or sizes of pipework, valves etc 'downsteam of the valve to be reduced in order to reduce plant costs.

In order to obtain the desired "decoupling" of upstream and downstream pressures it is clearly necessary to create sonic flow at the valve, when "decoupling" should occur at and below the critical pressure ratio. The critical pressure ratio itself is a function of the ratio $\frac{\text{specific heat at constant pressure}}{\text{specific heat at constant volume}}$ and therefore varies with the gas. Typically the critical pressure ratio for air is about .52. In practice however, if an orthodox control valve is used or an orifice to effect decoupling, the apparent critical pressure ratio is about .32 when operating at throat Reynolds Numbers in the range 150 to 500. This may be explained as follows:- when the control valve is set to a fixed position and the upstream pressure is held constant, flow rate increases as the downstream pressure at the throat (or pressure ratio) is increased. At the critical pressure ratio, flow becomes sonic and therefore a maximum at constant upstream pressure. As the downstream pressure is decreased further, the jet diameter (or vena contracta) keeps increasing and therefore since the flow rate is proportional to sonic velocity (constant) x area, flow rate increases until the jet diameter is maximised at a pressure ratio of about .33. Further reduction in pressure ratio has been shown to give the required effect of decoupling upstream from downstream pressure.

An object of the present invention is to tend to avoid a vena contracta forming in free space by enclosing the jet to avoid separation from the walls and to gradually increase the outlet area in 'Venturi' fashion for efficient conversion of the gas kinetic energy to pressure recovery. There is inevitably some energy lost in friction along the shaped passageways but this has been shown to be vastly less than the energy lost in turbulence resulting from free expansion. The apparent critical pressure may be increased by a factor of 2, ie from .32 to .64 using the device.

An incidental advantage of this device since it operates at sonic velocity is that when used with a single pressure measuring device for the upstream pressure the flow rate may be determined from the calibrated dial on the manual control valve since flow rate $\underline{M} = Z$ $P$ where Z is valve calibration, calibrated by adjuster 50.

From the above description, it can be seen that an improved valve is provided.

30425RR

CLAIMS

1. A valve comprising a housing (10) which contains an inlet port (1) and an outlet port (2), which housing defines an internal aperture (40), and a metering member (4) operable to move within the aperture, characterised in .that the housing is shaped so as to provide a tapered or curved wall of narrowing cross section (41) to fluid flow into the aperture and of widening cross section (43) to fluid flow out of the aperture, fluid flowing at sonic velocity in a neck defined by the inner wall of the aperture and the outer wall of the metering member, there being a critical pressure ratio between inlet and outlet pressure in the region of 0.5 to 0.7.

2. A valve as claimed in claim 1, in which the metering member is an elongate member.

3. A valve as claimed in claim 1 or 2, in which the member tapers in accordance with a desired curve.

4. A valve as claimed in claim 3, in which the metering member tapers to a point.

5. A valve as claimed in claim 3, in which the metering member decreases in diameter exponentially towards a point.

30425RR

Fig. 1.

Fig.2.

Fig. 3.

European Patent
Office

EUROPEAN SEARCH REPORT

0079147
Application number

EP  82 30 5577

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | F 16 K   47/04 |
| A | DE-B-2 228 002   (KUFSTEINER ARMATUREN- UND METALLWARENFABRIK) * Figure 1 * | 1-3 | |
| | --- | | |
| A | DK-C-  108 833   (SVENSKA FLAKTFABRIKEN) * Figure 1 * | 1-3 | |
| | --- | | |
| A | US-A-2 891 570   (KRUPP) * Figure 3 * | 1-3 | |
| | --- | | |
| A | US-A-3 180 360   (PAVLIN) * Figure 1 * | 1 | |
| | --- | | |
| A | AT-B-  247 090   (ZIMMER) | | **TECHNICAL FIELDS SEARCHED (Int. Cl. 3)** |
| | --- | | F 16 K    1/00 |
| A | DE-C-  760 185 (SIEMENS-SCHUCKERT) | | F 16 K   47/00 |
| | ----- | | |

The present search report has been drawn up for all claims

| Place of search BERLIN | Date of completion of the search 10-01-1983 | Examiner SCHLABBACH M |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82